# EUROPEAN PATENT APPLICATION

(11) **EP 4 303 901 A1**
(43) Date of publication of application: **10.01.2024**
(21) Application number: 22807263.3
(22) Date of filing: 30.03.2022
(51) Int. Cl.: H01G 11/12, H01G 11/82, H01M 50/209, H01M 50/284, H01M 50/296, H01M 50/505

(54) **POWER STORAGE DEVICE**

(30) Priority: 11.05.2021 JP 2021080587
(71) Applicant: GS Yuasa International Ltd., Kisshoin, Minami-ku, Kyoto-shi, Kyoto 601-8520 (JP)
(72) Inventor: FUJIKURA Ryohei, Kyoto-shi, Kyoto 601-8520 (JP); MUNENAGA Noriyoshi, Kyoto-shi, Kyoto 601-8520 (JP)
(74) Representative: Isarpatent
(86) International application number: PCT/JP2022/015746
(87) International publication number: WO 2022/239559

(57) **Abstract**

An energy storage apparatus includes an energy storage device, a circuit board, an electrical device, and a bus bar. The circuit board includes a board and a board terminal electrically connected to the energy storage device and fixed to the board. A device terminal fixed to the electrical device and the bus bar are fixed together at once to the board terminal to be electrically connected to the board terminal.

## Description

### TECHNICAL FIELD

The present invention relates to an energy storage apparatus including a circuit board and an electrical device.

### BACKGROUND ART

Patent Document 1 discloses a structure of a battery pack including a plurality of battery cells (energy storage devices). The battery pack includes a battery management system (BMS) circuit board for controlling electrical charge and discharge of the energy storage device, and a current sensor unit for measuring a current. The current sensor unit is soldered to the BMS circuit board in a state of being erected vertically to the BMS circuit board. A bus bar is fastened to the end of the current sensor unit by a bolt and a nut.

### PRIOR ART DOCUMENT

### PATENT DOCUMENT

Patent Document 1: JP-A-2020-517075

### SUMMARY OF THE INVENTION

### PROBLEMS TO BE SOLVED BY THE INVENTION

In general, an energy storage apparatus includes a circuit board such as a BMS circuit board and an electrical device such as a relay and a current sensor unit as in the above-described conventional battery pack, and the circuit board, the electrical device, and an external terminal are electrically connected via a bus bar. A connection portion between the plurality of conducting elements (the circuit board, the electrical device, the bus bar, and the like) is desired to have a high connection strength, a low electric resistance value, and ease of connection work. In the conventional battery pack described above, the bus bar is connected to a portion of the current sensor unit different from the portion connected to the BMS circuit board by a bolt and a nut. Therefore, there arises a problem that stress tends to concentrate on a connection portion between the current sensor unit and the BMS circuit board by soldering due to an external force applied to the current sensor unit by the bus bar. Further, when the plurality of conductive elements is connected in series, resistance values of the plurality of connection portions are accumulated in a current path between the energy storage device and the external terminal. This may cause a decrease in performance of the energy storage apparatus.

The present invention has been made by the inventors of the present application with a new focus on the above problems, and an object of the present invention is to provide an energy storage apparatus with improved reliability.

### MEANS FOR SOLVING THE PROBLEMS

An energy storage apparatus according to one aspect of the present invention is an energy storage apparatus including an energy storage device, a circuit board, an electrical device, and a bus bar, in which the circuit board includes a board and a board terminal electrically connected to the energy storage device and fixed to the board, and in which a device terminal and the bus bar fixed to the electrical device are fixed together at once to the board terminal to be electrically connected to the board terminal.

### ADVANTAGES OF THE INVENTION

According to the present invention, it is possible to provide an energy storage apparatus with improved reliability.

### BRIEF DESCRIPTION OF THE DRAWINGS

Fig. 1 is a perspective view illustrating an external appearance of an energy storage apparatus according to an embodiment.
Fig. 2 is an exploded perspective view of the energy storage apparatus according to the embodiment.
Fig. 3 is a perspective view illustrating a state in which a circuit board, an electrical device, and a bus bar according to the embodiment are connected to each other.
Fig. 4 is an exploded perspective view corresponding to Fig. 3.
Fig. 5 is a side view corresponding to Fig. 3.

### MODE FOR CARRYING OUT THE INVENTION

An energy storage apparatus according to one aspect of the present invention is an energy storage apparatus including an energy storage device, a circuit board, an electrical device, and a bus bar, in which the circuit board includes a board and a board terminal electrically connected to the energy storage device and fixed to the board, and in which a device terminal fixed to the electrical device and the bus bar are fixed together at once to the board terminal to be electrically connected to the board terminal.

With this configuration, the electrical device that is a relay or the like and the bus bar can be fixed together at once to the circuit board, and the electrical device and the circuit board can be electrically connected to the bus bar at one place. Therefore, even when the bus bar applies a mechanical load to the electrical device, a possibility that stress concentrates on the connection portion between the electrical device and the circuit board is reduced. Since the circuit board and the electrical device are in a state substantially directly attached to the bus bar, a resistance value in a current path connecting the bus bar and each of the circuit board and the electrical device can be made relatively small. As described above, the energy storage apparatus according to the present aspect is an energy storage apparatus with improved reliability.

The device terminal and the bus bar may be fixed to the board terminal in a state where the device terminal and the bus bar are stacked on the board terminal in this order when a position of the circuit board with respect to the energy storage device is defined as an upper side.

With this configuration, the bus bar is located at the uppermost position in the connection portion between the board terminal, the device terminal, and the bus bar. Therefore, when a cover member such as an inner lid or an outer lid is disposed from above the circuit board, the bus bar can be disposed in a state of being fixed to the cover member. That is, positioning of the bus bar can be performed by arranging the cover member at a predetermined position. Accordingly, it is possible to efficiently manufacture the energy storage apparatus with improved reliability.

The energy storage apparatus may further include an outer case which houses the energy storage device, in which an external terminal may be disposed on the outer case, and the bus bar is a single conductive member connected to the external terminal.

With this configuration, the bus bar connected to the external terminal that exchanges electric power with a device outside the energy storage apparatus is directly mechanically and electrically connected to the electrical device and the circuit board. Therefore, the resistance value in a main path (power line) of current during electrical charge-discharge of the energy storage apparatus is suppressed. This contributes to improvement of reliability of the energy storage apparatus.

The energy storage apparatus may further include a fixing member that fixes the device terminal and the bus bar to the board terminal, in which one of a nut and a bolt included in the fixing member may be fixed to the board terminal, and the other of the nut and the bolt may be fastened to the one to fix the device terminal and the bus bar to the board terminal.

With this configuration, since the nut or the bolt is fixed to the board terminal, work of fixing the device terminal and the bus bar together at once to the board terminal can be easily performed.

The electrical device may be a relay that switches on and off electrical connection between the energy storage device and the bus bar according to a signal transmitted from the circuit board.

With this configuration, the relay on the main path (power line) of current in the energy storage apparatus can be fixed to the circuit board together with the bus bar. In general, since a mechanical relay switch is used for the relay on the power line, the relay is relatively heavy. Therefore, fixing the electrical device that is a relay to the bus bar and the circuit board together at once is useful for improving vibration resistance or impact resistance of the relatively heavy electrical device. This contributes to improvement of reliability of the energy storage apparatus.

Hereinafter, an energy storage apparatus according to an embodiment of the present invention (including a modification example thereof) will be described with reference to the drawings. The embodiments described below illustrate comprehensive or specific examples. Numerical values, shapes, materials, constituent elements, arrangement positions and connection modes of the constituent elements, manufacturing processes, the order of the manufacturing processes, and the like illustrated in the following embodiments are merely examples, and are not intended to limit the present invention. In each drawing, dimensions and the like are not strictly illustrated. In the drawings, the same or similar components are denoted by the same reference numerals.

In the following description and drawings, a longitudinal direction of an outer case of an energy storage apparatus, an arrangement direction of a plurality of energy storage devices, or an opposing direction of long side surfaces of a case of an energy storage device is defined as an X-axis direction. A lateral direction of the outer case of the energy storage apparatus, an opposing direction of short side surfaces of the case of the energy storage device, or an arrangement direction of a pair of electrode terminals in one energy storage device is defined as a Y-axis direction. An arrangement direction of a body of the outer case of the energy storage apparatus and a lid body of the outer case of the energy storage apparatus, an arrangement direction of a bus bar holder and an energy storage device unit, or a vertical direction is defined as a Z-axis direction. The X-axis direction, the Y-axis direction, and the Z-axis direction are directions intersecting (orthogonal in the present embodiment) each other. Although the Z-axis direction may not be the vertical direction depending on the usage mode, the Z-axis direction will be described below as the vertical direction for convenience of description.

In the following description, an X-axis positive direction indicates an arrow direction of an X-axis, and an X-axis negative direction indicates a direction opposite to the X-axis positive direction. The same applies to the Y-axis direction and the Z-axis direction. The term "X-axis direction" simply means one of two directions parallel to the X-axis. The same applies to terms related to the Y-axis and the Z-axis.

Expressions indicating relative directions or postures, such as parallel and orthogonal, strictly include cases where the directions or postures are not the same. For example, two directions being orthogonal to each other not only means that the two directions are completely orthogonal to each other, but also means that the two directions are substantially orthogonal to each other, that is, the two directions include a difference of, for example, about several percent. In the following description, the expression "insulation" means "electrical insulation".

### (Embodiment)

### [1. General description of energy storage apparatus]

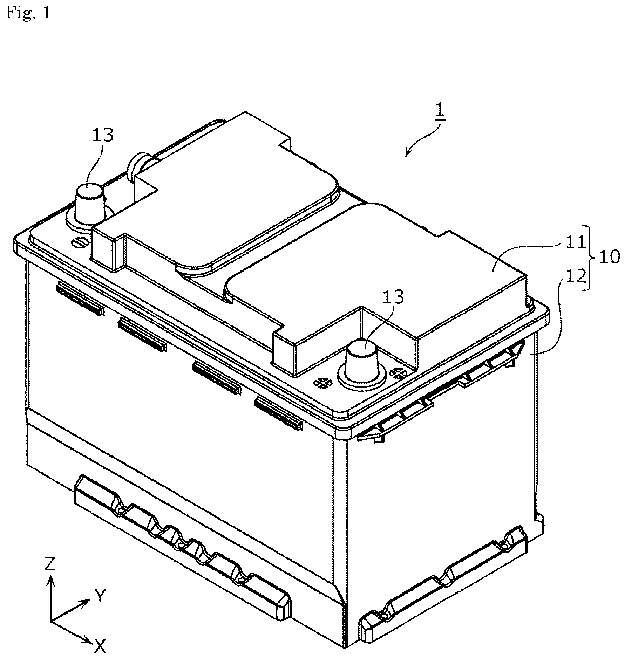

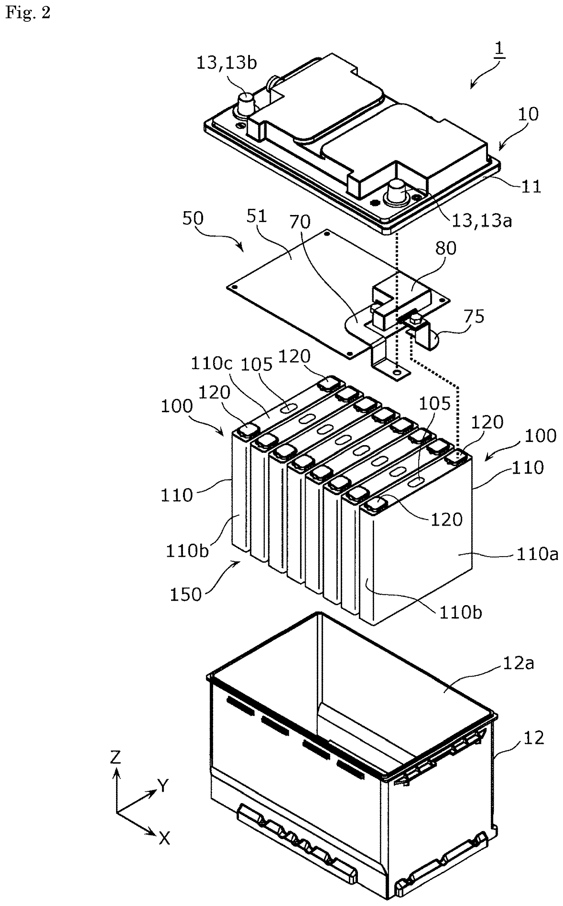

First, a schematic configuration of an energy storage apparatus 1 according to an embodiment will be described with reference to Figs. 1 and 2. Fig. 1 is a perspective view illustrating an external appearance of the energy storage apparatus 1 according to the embodiment. Fig. 2 is an exploded perspective view of the energy storage apparatus 1 according to the embodiment. Although a bus bar joined to electrode terminals 120 of energy storage devices 100, wirings connected to an electrical device 80, and the like are housed in the inside of an outer case 10 in addition to the members illustrated in Fig. 2 and subsequent drawings, illustration and description of these members are appropriately omitted.

The energy storage apparatus 1 is an apparatus that can be charged with electricity from the outside and can discharge electricity to the outside, and has a substantially rectangular parallelepiped shape in the present embodiment. The energy storage apparatus 1 is, for example, a battery module (assembled battery) used for power storage application, power supply application, or the like. Specifically, the energy storage apparatus 1 is used as a battery or the like for driving or starting an engine of a moving body such as an automobile, a motorcycle, a watercraft, a ship, a snowmobile, an agricultural machine, a construction machine, or a railway vehicle for an electric railway. Examples of the automobile include an electric vehicle (EV), a hybrid electric vehicle (HEV), a plug-in hybrid electric vehicle (PHEV), and a fossil fuel (gasoline, diesel fuel, liquefied natural gas, or the like) automobile. Examples of the railway vehicle for an electric railway include a train, a monorail, a linear motor car, and a hybrid train including both a diesel engine and an electric motor. The energy storage apparatus 1 can also be used as a stationary battery or the like used for home use, business use, or the like.

As illustrated in Fig. 1 and Fig. 2, the energy storage apparatus 1 includes the outer case 10 and an energy storage device unit 150 housed in the outer case 10. The outer case 10 is disposed outside the energy storage device unit 150, fixes them at a predetermined position, and protects them from an impact or the like. In the present embodiment, the outer case 10 is a case (module case) having a box shape (substantially rectangular parallelepiped shape) which forms a housing of the energy storage apparatus 1. The outer case 10 is formed by, for example, an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), polyamide (PA), an ABS resin, or a composite material thereof, or an insulation-coated metal or the like. The outer case 10 thus prevents the energy storage device unit 150 and the like from coming into contact with an external metal member and the like. The outer case 10 may be formed by a conductive member of metal or the like as long as an electrical insulation property between the outer case 10 and the energy storage device unit 150 or the like is maintained.

In the present embodiment, the outer case 10 includes an outer case body 12 and a lid body 11. The outer case body 12 is a bottomed rectangular cylindrical housing in which an opening 12a is formed on a Z-axis positive direction side, and houses the energy storage device unit 150 and the like therein. The lid body 11 is a rectangular member which closes the opening 12a of the outer case body 12. The lid body 11 is preferably joined to the outer case body 12 in an airtight or watertight manner by an adhesive, heat sealing, ultrasonic welding, laser welding, or the like. A pair of external terminals 13, which is a pair of module terminals of a positive electrode and a negative electrode, is disposed on the lid body 11. The energy storage apparatus 1 is charged with electricity from the outside and discharges electricity to the outside through the pair of external terminals 13. The external terminal 13 is formed by, for example, a conductive member made of metal such as aluminum, an aluminum alloy, copper, or a copper alloy. When the pair of external terminals 13 is distinguished by a positive electrode and a negative electrode, the external terminal 13 of the positive electrode is referred to as an "external terminal 13a", and the external terminal 13 of the negative electrode is referred to as an "external terminal 13b".

The energy storage device unit 150 includes one or more energy storage devices 100. In the present embodiment, eight energy storage devices 100 are connected by a plurality of bus bars (not illustrated) to construct the energy storage device unit 150. These eight energy storage devices 100 are connected in series by, for example, seven bus bars. The electrical connection mode of the eight energy storage devices 100 is not limited thereto. When two energy storage devices 100 connected in parallel are formed as one subunit, four subunits may be connected in series by three bus bars. The energy storage device unit 150 may further include a member (not illustrated) such as a spacer disposed between adjacent energy storage devices 100 and a binding member binding the plurality of energy storage devices 100 in the arrangement direction thereof.

The energy storage device 100 is a secondary battery (battery cell) that can be charged with electricity and can discharge electricity, and is specifically a nonaqueous electrolyte secondary battery such as a lithium ion secondary battery. As illustrated in Fig. 2, the energy storage device 100 includes a case 110 having a flat rectangular parallelepiped shape (prismatic shape) and a pair of (positive electrode side and negative electrode side) electrode terminals 120 fixed to the case 110. An electrode assembly, a current collector, an electrolyte solution, and the like (not illustrated) are accommodated in the case 110. Examples of the electrode assembly of the energy storage device 100 include a winding-type electrode assembly formed by winding a positive electrode plate and a negative electrode plate with a separator sandwiched therebetween in a layered manner. The energy storage device 100 may include a stacked electrode assembly (stacking-type electrode assembly) formed by stacking a plurality of plate-shaped electrode plates or a bellows-type electrode assembly formed by folding the electrode plates in a bellows shape.

The energy storage device 100 is not limited to the nonaqueous electrolyte secondary battery, and may be a secondary battery other than the nonaqueous electrolyte secondary battery, or may be a capacitor. The energy storage device 100 may be not a secondary battery but a primary battery that can use stored electricity without being charged with electricity by a user. The energy storage device 100 may be a battery using a solid electrolyte. The energy storage device 100 may be a pouch type energy storage device. Further, the shape of the energy storage device 100 is not limited to the above-mentioned prismatic shape, and may be a polygonal columnar shape, a cylindrical shape, an elliptical columnar shape, an oval columnar shape, or the like other than the above-mentioned prismatic shape.

In the present embodiment, as illustrated in Fig. 2, the case 110 includes a pair of long side surfaces 110a, a pair of short side surfaces 110b, and a terminal arrangement surface 110c. The terminal arrangement surface 110c is a surface on which the electrode terminals 120 of the positive electrode and the negative electrode are arranged. In the present embodiment, a gas release valve 105 is further disposed on the terminal arrangement surface 110c. The gas release valve 105 is a part that is opened by receiving an internal pressure of the case 110 when the internal pressure of the case is excessively increased, and thereby discharges the gas inside the case 110 to the outside. In the energy storage device unit 150, each of the plurality of energy storage devices 100 is arranged in a posture where the long side surfaces 110a are directed in the arrangement direction (X-axis direction).

The circuit board 50 and the electrical device 80 are disposed between the energy storage device unit 150 and the lid body 11. The circuit board 50 is a control circuit board called a battery management unit (BMU) in the present embodiment. The circuit board 50 detects a voltage or the like of each of the plurality of energy storage devices 100 and controls a charged state of the plurality of energy storage devices 100. Specifically, the circuit board 50 is electrically connected to each of the plurality of energy storage devices 100 through voltage detection wires (detection lines) (not illustrated), and hence the voltage of each energy storage device 100 can be measured through the detection lines. The circuit board 50 includes, for example, a plurality of electronic components mounted on a board 51 which is a printed board, but illustration of the plurality of electronic components is omitted.

In the present embodiment, the electrical device 80 is a relay having a mechanical relay switch. The electrical device 80 has a function of switching on and off electrical charge or discharge of the plurality of energy storage devices 100 under the control of the circuit board 50. The electrical device 80 is connected to a total positive terminal of the energy storage device unit 150 through the bus bar 75, and is connected to the external terminal 13 (external terminal 13a) of the positive electrode through a bus bar 70. The total positive terminal of the energy storage device unit 150 is, for example, the electrode terminal 120 of the positive electrode of the energy storage device 100 at an end in the X-axis positive direction in Fig. 2.

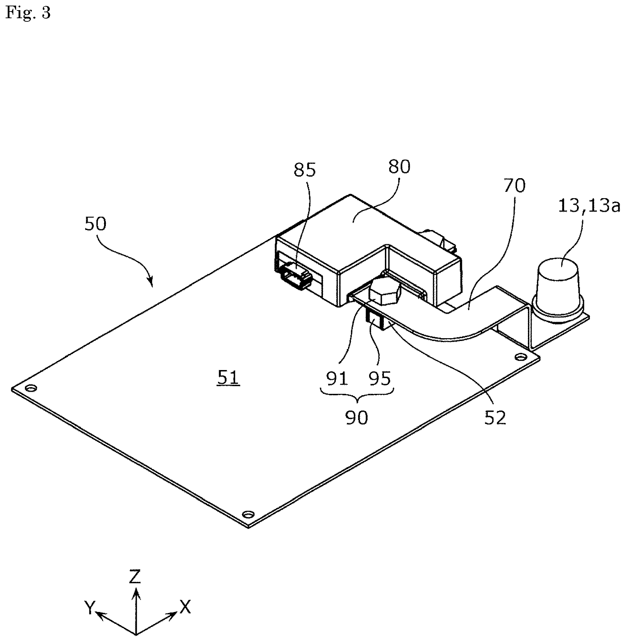

The circuit board 50 and the electrical device 80 configured as described above are accommodated in the inside of the outer case 10 in a state where the circuit board 50 and the electrical device 80 are fixed to an insulating member such as a bus bar holder (not illustrated) disposed above the energy storage devices 100 (Z-axis positive direction). The circuit board 50 and the electrical device 80 are electrically connected to each other, and the electrical device 80 and the bus bar 70 are also electrically connected to each other. In the energy storage apparatus 1 configured as described above, in the present embodiment, three members of the circuit board 50, the electrical device 80, and the bus bar 70 are electrically and mechanically connected at one place. That is, the connection of the three members is integrated at one place. Features of such a connection structure will be described below with reference to Figs. 3 to 5.

### [2. Connection structure of circuit board, electrical device, and bus bar]

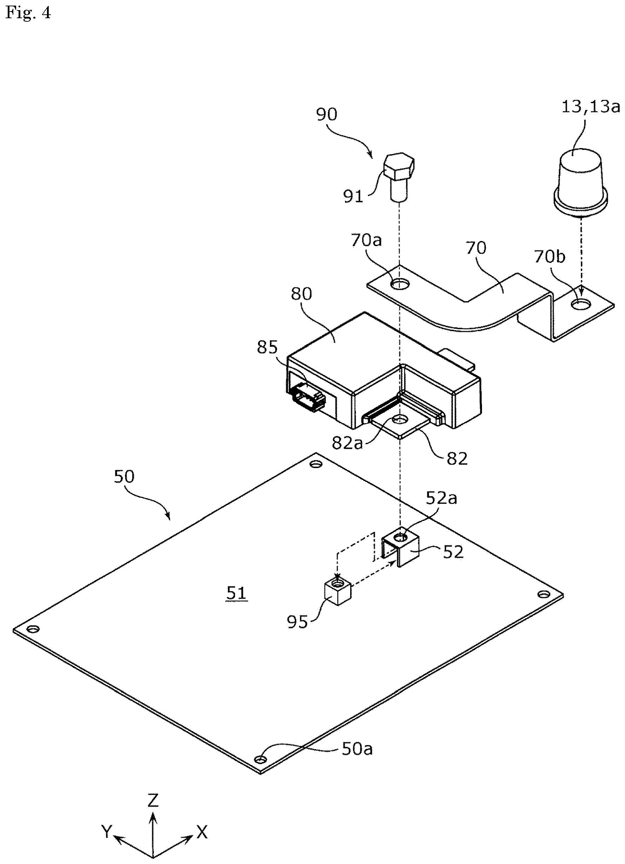

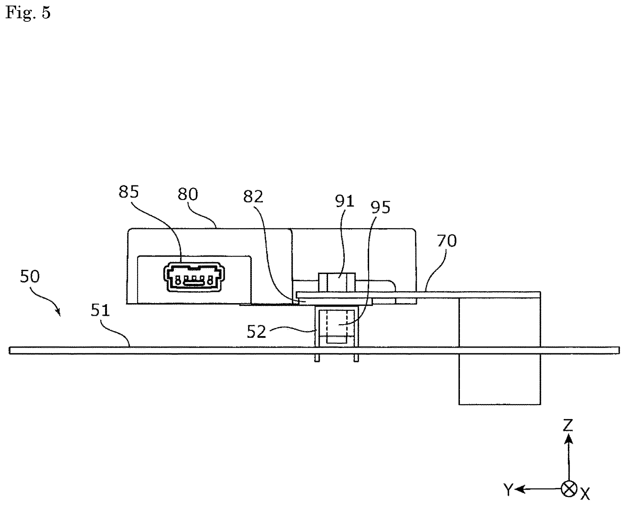

Fig. 3 is a perspective view illustrating a state in which the circuit board 50, the electrical device 80, and the bus bar 70 according to the embodiment are connected to one another. Fig. 4 is an exploded perspective view corresponding to Fig. 3. Fig. 5 is a side view corresponding to Fig. 3. Fig. 5 illustrates a side view of the circuit board 50, the electrical device 80, and the bus bar 70 in a mutually connected state as viewed in the X-axis negative direction, and illustration of the external terminal 13a illustrated in Figs. 3 and 4 is omitted. In Fig. 5, the electrical device 80 is illustrated in a state of being supported only by a board terminal 52, but the electrical device 80 may be further supported by an insulating member such as a bus bar holder disposed above the energy storage device unit 150.

As illustrated in Figs. 3 to 5, the circuit board 50 includes a board 51 and a board terminal 52 protruding from the board 51 in the Z-axis positive direction. The electrical device 80 includes a plate-shaped device terminal 82, and the device terminal 82 is fixed to the board terminal 52 by a fixing member 90. In the present embodiment, the fixing member 90 includes a bolt 91 and a nut 95. That is, the device terminal 82 is mechanically and electrically connected to the board terminal 52 by fastening the bolt 91 penetrating the device terminal 82 and the board terminal 52 to the nut 95. Specifically, as illustrated in Fig. 4, the board terminal 52 is formed in a box shape in which the nut 95 is accommodated, and includes a through hole 52a formed at a position facing a screw hole of the nut 95. The bolt 91 inserted and passed through the through hole 82a provided in the device terminal 82 passes through the through hole 52a and is fastened to the nut 95. The board terminal 52 also functions as a rotation stopper of the nut 95, and thus the bolt 91 can be easily fastened. In Fig. 4, to clearly illustrate the nut 95, the nut 95 is illustrated separately from the board terminal 52, but the nut 95 and the board terminal 52 may not be separable. In the present embodiment, the nut 95 is fixed to the board terminal 52 by welding or the like, whereby the board terminal 52 can be treated as one component to which the nut 95 is fixed. Further, the nut 95 may be provided integrally with the board terminal 52 as a part of the board terminal 52. In other words, the nut 95 may include a lead portion bonded to the wiring of the board 51.

In the present embodiment, the fixing member 90 also plays a role of mechanically and electrically connecting the bus bar 70 to the electrical device 80. That is, the bus bar 70 and the device terminal 82 are fixed together at once to the board terminal 52 by the bolt 91 and the nut 95. Specifically, the bus bar 70 includes a through hole 70a through which the bolt 91 passes at one end, and a through hole 70b for fixing the external terminal 13a at the other end. That is, the bolt 91 included in the fixing member 90 is fastened to the nut 95 while being inserted through the through hole 70a of the bus bar 70, the through hole 82a of the device terminal 82, and the through hole 52a of the board terminal 52 in this order. Thus, the external terminal 13a is electrically connected to the electrical device 80 and the circuit board 50 via the bus bar 70. The circuit board 50 in a state where the electrical device 80 and the bus bar 70 are fixed to the board terminal 52 may be fixed to a member such as a bus bar holder on which the circuit board 50 is mounted by screws penetrating through each of plural screw holes 50a (see Fig. 4).

The circuit board 50 which is a control circuit board is electrically connected to the external terminal 13 (external terminal 13b) of the negative electrode via a bus bar (not illustrated), and operates by power received via the external terminals 13a and 13b. The electrical device 80 which is a relay is disposed in the middle of a current path between the external terminal 13a and the energy storage device unit 150, and is connected to the circuit board 50 by a signal line (not illustrated). Specifically, the signal line extending from the circuit board 50 includes a connector at an end, and the connector is inserted into a socket 85 of the electrical device 80, whereby the signal line is connected to the electrical device 80. Therefore, the electrical device 80 can receive a signal (control signal) from the circuit board 50 via the signal line, and can switch on and off the relay switch according to the control signal. Thus, on and off states of charge and discharge of the energy storage apparatus 1 can be switched.

As described above, the energy storage apparatus 1 according to the present embodiment includes the energy storage devices 100, the circuit board 50, the electrical device 80, and the bus bar 70. The circuit board 50 includes the board 51 and the board terminal 52 electrically connected to the energy storage device 100 and fixed to the board 51. The device terminal 82 fixed to the electrical device 80 and the bus bar 70are fixed together at once to the board terminal 52 to be electrically connected to the board terminal 52.

With this configuration, the electrical device 80 and the bus bar 70 can be fixed together at once to the circuit board 50, and the electrical device 80 and the circuit board 50 can be electrically connected to the bus bar 70 at one place. Therefore, even when the bus bar 70 applies a mechanical load to the electrical device 80, a possibility that stress concentrates on a connection portion between the electrical device 80 and the circuit board 50 is reduced. Since the circuit board 50 and the electrical device 80 are in a state substantially directly attached to the bus bar 70, the resistance value in the current path connecting the bus bar 70 to each of the circuit board 50 and the electrical device 80 can be made relatively small. By connecting the three members at one place, the energy storage apparatus 1 can be efficiently manufactured. Each of the circuit board 50, the electrical device 80, and the bus bar 70 is placed in a relationship in which one of the three members is fixed to the other two and also fixes the other two. Therefore, resistance to impact or vibration is improved. As described above, the energy storage apparatus 1 according to the present aspect is an energy storage apparatus with improved reliability.

In the present embodiment, the device terminal 82 and the bus bar 70 are fixed to the board terminal 52 in a state where the device terminal 82 and the bus bar 70 are stacked on the board terminal 52 in this order when the position of the circuit board 50 with respect to the energy storage device 100 is defined as an upper side.

As described above, in the present embodiment, the bus bar 70 is located at the uppermost position at the connection portion among the board terminal 52, the device terminal 82, and the bus bar 70. Therefore, when the lid body 11 is disposed from above the circuit board 50 accommodated in the outer case body 12, the bus bar 70 can be disposed in a state of being fixed to the lid body 11. When the bus bar 70 is integrated with the lid body 11 by insert molding, the bus bar 70 can be positioned by performing an operation of attaching the lid body 11 to the outer case body 12. Thus, it is possible to efficiently manufacture the energy storage apparatus 1 with improved reliability. In this case, by providing the opening portion at a position facing the board terminal 52 in the Z-axis direction of the lid body 11, it is possible to perform an operation of fastening the bolt 91 through the opening portion after the lid body 11 is joined to the outer case body 12. Furthermore, by closing the opening portion with a lid plate formed by, for example, a resin material, an airtight state of the outer case 10 can be maintained.

In the present embodiment, the energy storage apparatus 1 includes the outer case 10 which houses the energy storage devices 100 therein. The external terminal 13 is disposed on the outer case 10, and the bus bar 70 is a single conductive member connected to the external terminal 13. Specifically, in the present embodiment, as illustrated in Figs. 3 and 4, the external terminal 13 (external terminal 13a) of the positive electrode is fixed to an end of the bus bar 70 on a side opposite to the end fixed by the fixing member 90.

With this configuration, the bus bar 70 which is connected to the external terminal 13 which exchanges electric power with a device outside the energy storage apparatus 1 is electrically connected directly to the electrical device 80 and the circuit board 50. Therefore, the resistance value in the main path (power line) of the current during electrical charge-discharge of the energy storage apparatus 1 is suppressed. This contributes to improvement of reliability of the energy storage apparatus 1.

In the present embodiment, the energy storage apparatus 1 includes the fixing member 90 that fixes the device terminal 82 and the bus bar 70 to the board terminal 52. The nut 95 included in the fixing member 90 is fixed to the board terminal 52, and the bolt 91 included in the fixing member 90 is fastened to the nut 95 to fix the device terminal 82 and the bus bar 70 to the board terminal 52.

With this configuration, since the nut 95 is fixed to the board terminal 52, the work of fixing the device terminal 82 and the bus bar 70 together at once to the board terminal 52 can be easily performed. This effect is also exhibited when the bolt 91 is fixed to the board terminal 52 and the nut 95 is fastened to the bolt 91. That is, a structure in which one of the nut 95 and the bolt 91 included in the fixing member 90 is fixed to the board terminal 52, and the other of the nut 95 and the bolt 91 is fastened to the one, the fixing work is facilitated.

Further, in the present embodiment, the electrical device 80 is a relay which switches on and off electrical connection between the energy storage device 100 and the bus bar 70 according to a signal transmitted from the circuit board 50.

With this configuration, the relay on the main path (power line) of the current in the energy storage apparatus 1 can be fixed to the circuit board 50 together with the bus bar 70. In general, since a mechanical relay switch is used for the relay on the power line, the relay is relatively heavy. Therefore, fixing the electrical device 80 that is a relay to the bus bar 70 and the circuit board 50 together at once is useful for improving vibration resistance or impact resistance of the relatively heavy electrical device 80. This contributes to improvement of reliability of the energy storage apparatus 1.

### [3. Modification examples]

Although the energy storage apparatus 1 according to the embodiment of the present invention has been described above, the present invention is not limited to this embodiment. The embodiment disclosed herein is illustrative in all respects and is not restrictive, and the scope of the present invention includes all modifications within the meaning and scope equivalent to the claims.

The direction in which the board terminal 52, the device terminal 82, and the bus bar 70 are stacked does not need to be the vertical direction (Z-axis direction). The board terminal 52, the device terminal 82, and the bus bar 70 may overlap in a lateral direction (direction parallel to the XY plane). In this case, the bolt 91 is fastened to the nut 95 in a state of penetrating these three members in a posture in which the axial direction thereof is parallel to the stacking direction of these three members. Thus, these three members are mechanically and electrically connected to each other together at once.

The positions of the nut 95 and the bolt 91 may be interchanged. For example, in Fig. 4, the bolt 91 may be provided on the board 51 by inserting a shaft portion of the bolt 91 from below the through hole 52a of the board terminal 52. In this case, the board terminal 52 and the bolt 91 may be joined by welding or the like. Further, for example, by providing a lead portion bonded to the wiring of the board 51 on a head portion of the bolt 91, a part of the bolt 91 may function as the board terminal 52. In either case, the shaft portion of the bolt 91 erected on the board 51 can be inserted into the through hole 82a of the device terminal 82 and the through hole 70a of the bus bar 70 and fastened to the nut 95. Thus, the electrical device 80 and the bus bar 70 can be fixed together at once to the circuit board 50, and the electrical device 80 and the circuit board 50 can be electrically connected to the bus bar 70 at one place.

A method for fixing the bus bar 70 and the device terminal 82 of the electrical device 80 to the board terminal 52 by the fixing member 90 is not limited to fastening by the bolt 91 and the nut 95. The bus bar 70 and the device terminal 82 may be fixed to the board terminal 52 by another method such as welding, caulking, or press fitting.

The board terminal 52, the device terminal 82, and the bus bar 70 may be detachably fixed. The board terminal 52, the device terminal 82, and the bus bar 70 may be undetachably fixed.

The board terminal 52 may protrude from the peripheral edge of the board 51. In this case, the board terminal 52 may protrude from the peripheral edge of the board 51 in a direction perpendicular to the board 51 or a direction parallel to the board 51.

The electrical device 80 is not limited to the relay, and may be another type of electrical device such as a protective circuit including a fuse or a current measuring instrument including a shunt resistor. The circuit board 50 is not limited to the control circuit board, and may be another type of circuit board such as a measurement circuit board for measuring voltage, temperature, or the like, or a communication circuit board forming a communication electronic circuit. The external terminal 13 connected to the electrical device 80 via the bus bar 70 may be the negative-electrode external terminal 13 (external terminal 13b).

The energy storage apparatus 1 does not need to include a sealed outer case like the outer case 10 illustrated in Fig. 1. The energy storage apparatus 1 may include an outer case including a plurality of opening portions (through holes) for heat dissipation in a wall portion. A binding member which binds the plurality of energy storage devices 100 included in the energy storage device unit 150 in the arrangement direction may function as an outer case which holds the energy storage device unit 150 and in which the pair of external terminals 13 and the like are disposed. The energy storage apparatus 1 may not include the outer case.

It is not necessary that the external terminal 13 illustrated in Fig. 1 and the like is fixed to the outer case 10, and for example, an end of the bus bar 70 may protrude to the outside from the outer case 10, and thereby may serve as an external terminal. A cable connected to the bus bar 70 inside the outer case 10 may be pulled out to the outside of the outer case 10, so that the cable serves as an external terminal.

A form constructed by arbitrarily combining the components included in the above embodiment and the modifications thereof is also included in the scope of the present invention.

### INDUSTRIAL APPLICABILITY

The present invention can be applied to an energy storage apparatus including an energy storage device such as a lithium ion secondary battery.

### DESCRIPTION OF REFERENCE SIGNS

1: energy storage apparatus
10: outer case
13, 13a, 13b: external terminal
50: circuit board
51: board
52: board terminal
70, 75: bus bar
80: electrical device
82: device terminal
90: fixing member
91: bolt
95: nut
100: energy storage device

## Claims

1. An energy storage apparatus comprising:
an energy storage device,
a circuit board,
an electrical device, and
a bus bar,
wherein the circuit board includes:
a board and
a board terminal electrically connected to the energy storage device and fixed to the board, and
wherein a device terminal fixed to the electrical device and the bus bar are fixed together at once to the board terminal to be electrically connected to the board terminal.

2. The energy storage apparatus according to claim 1, wherein the device terminal and the bus bar are fixed to the board terminal in a state where the device terminal and the bus bar are stacked on the board terminal in this order when a position of the circuit board with respect to the energy storage device is defined as an upper side.

3. The energy storage apparatus according to claim 1 or 2, further comprising an outer case which houses the energy storage device, wherein
an external terminal is disposed on the outer case, and
the bus bar is a single conductive member connected to the external terminal.

4. The energy storage apparatus according to any one of claims 1 to 3, further comprising a fixing member that fixes the device terminal and the bus bar to the board terminal, wherein one of a nut and a bolt included in the fixing member is fixed to the board terminal, and the other of the nut and the bolt is fastened to the one to fix the device terminal and the bus bar to the board terminal.

5. The energy storage apparatus according to any one of claims 1 to 4,
wherein the electrical device is a relay that switches on and off electrical connection between the energy storage device and the bus bar according to a signal transmitted from the circuit board.

6. The energy storage apparatus according to any one of claims 1 to 5, wherein the board terminal protrudes from a peripheral edge of the board.
